# EUROPEAN PATENT APPLICATION

(11) **EP 4 644 148 A1**
(43) Date of publication of application: **05.11.2025**
(21) Application number: 23911263.4
(22) Date of filing: 29.08.2023
(51) Int. Cl.: B60K 1/04

(54) **ELECTRIC WORK VEHICLE**

(30) Priority: 27.12.2022 JP 2022210894
(71) Applicant: Kubota Corporation, Osaka 556-8601 (JP)
(72) Inventor: MIYAZAKI, Daisuke, Sakai-shi, Osaka 590-0908 (JP); IMAIZUMI, Makoto, Sakai-shi, Osaka 590-0908 (JP)
(74) Representative: Schlegel, Sebastian
(86) International application number: PCT/JP2023/031293
(87) International publication number: WO 2024/142479

(57) **Abstract**

An electric work vehicle includes a harness connecting a front portion of a motor (40) to an inverter, and a positioning mechanism (7) having a first guide portion (71) provided on one of the motor (40) and a support member (50) and a second guide portion (72) provided on the other of the motor (40) and the support member (50), and configured to position the motor (40) relative to the support member (50) as viewed in the front-back direction, by the first guide portion (71) and the second guide portion (72) coming in contact with each other. The positioning mechanism (7) is configured such that, at a time of attaching the motor (40) to the support member (50), the first guide portion (71) is contactable with the second guide portion (72) while a protrusion (45) is forward of a support front surface (51). (Fig. 4)

## Description

### Technical Field

The present invention relates to an electric work vehicle including a battery and a motor.

### Background Art

A known example of an electric work vehicle such as described above is disclosed in Patent Document 1. This electric work vehicle ("tractor" in Patent Document 1) includes a motor drivable by power supplied from a battery ("drive battery" in Patent Document 1).

This electric work vehicle includes an inverter that converts direct-current electric power from the battery into alternating-current electric power and supplies the alternating-current electric power to the motor.

This motor is supported by a front support frame and a support member ("back support frame" in Patent Document 1). More specifically, the front support frame supports a front portion of the motor from below. The support member contacts a back end portion of the motor and supports a back portion of the motor.

The motor has an output shaft that extends rearward through the support member.

### Prior Art Documents

Patent Document 1 : JP 2021-953A

### Disclosure of the Invention

### Problem to be Solved by the Invention

The electric work vehicle described in Patent Document 1 can conceivably be constituted without the front support frame. In this case, the motor is held in a cantilever manner by the support member. In such a configuration, if a recess that is recessed rearward is formed in the front surface of the support member and a protrusion that fits into the recess is formed on a back end portion of the motor, the motor can, at the time of being attached to the support member, be positioned relative to the support member as viewed in a front-back direction, as a result of the protrusion fitting into the recess.

However, in a configuration including such a recess and a protrusion, it is perceived that, in the case where the support member is made of a material having a comparatively high hardness (e.g., iron), the surface of the protrusion could be scratched when the recess and the protrusion are fitted together, due to the protrusion coming in contact with the recess or the periphery thereof.

Also, it is perceived that, in the case where the electric work vehicle described in Patent Document 1 is provided with a harness that connects the motor to the inverter, a connector of the motor to the harness or the harness itself will interfere with attaching the motor to the support member. As a result, it is perceived that smoothly attaching the motor to the support member will not be possible.

An object of the present invention is to provide an electric work vehicle in which, at the time of attaching a motor to a support member, the motor can be positioned and smoothly attached, and scratching of the surface of the motor is readily avoided.

### Means for Solving Problem

An electric work vehicle of the present invention includes a battery, a motor held by a support member and drivable by power supplied from the battery, an inverter configured to convert direct-current electric power from the battery into alternating-current electric power and supply the alternating-current electric power to the motor, and a harness connecting a front portion of the motor to the inverter, the inverter supplying power to the motor through the harness, the motor being held by the support member, with an output shaft of the motor extending rearward through the support member, the support member having a support front surface that is a front surface of the support member in which a recess recessed rearward is formed, the motor having a contact surface contacting the support front surface and a protrusion protruding rearward from the contact surface and fitting into the recess, the protrusion being made of a first material, the support member being made of a second material having a higher hardness than the first material, includes a positioning mechanism having a first guide portion provided on one of the motor and the support member and a second guide portion provided on the other of the motor and the support member, and configured to position the motor relative to the support member as viewed in a front-back direction, by the first guide portion and the second guide portion coming in contact with each other, and at a time of attaching the motor to the support member, the first guide portion and the second guide portion of the positioning mechanism are contactable with each other while the protrusion is forward of the support front surface.

According to the above configuration, at the time of attaching the motor to the support member, the first guide portion and the second guide portion come in contact with each other before the protrusion fits into the recess. The motor can thereby be positioned. Furthermore, by moving the motor rearward while keeping the first guide portion and the second guide portion in contact with each other, the protrusion can be fitted into the recess with the motor positioned relative to the support member as viewed in the front-back direction. The surface of the protrusion is thereby unlikely to be scratched, compared to the case where the protrusion is fitted into the recess without positioning the motor relative to the support member as viewed in the front-back direction (i.e., with the motor freely moveable relative to the support member as viewed in the front-back direction).

Moreover, according to the above configuration, the motor is attached to the support member from the front, and the harness connecting the motor to the inverter is connected to a front portion of the motor. Thus, neither the connector of the motor to the harness nor the harness itself is likely to interfere with attaching the motor to the support member, compared to the case where the harness is connected to a back portion of the motor.

That is, according to the above configuration, an electric work vehicle can be realized in which, at the time of attaching the motor to the support member, the motor can be positioned and smoothly attached, and scratching of the surface of the motor is readily avoided.

Furthermore, in the present invention, preferably the first guide portion is a pin extending in the front-back direction, the second guide portion is a hole that fits together with the pin, the positioning mechanism has a plurality of positioning portions, and the positioning portions each include one first guide portion and one second guide portion that correspond to each other.

According to the above configuration, the positioning mechanism that positions the motor relative to the support member as viewed in the front-back direction can be realized by a comparatively simple configuration. Moreover, by fitting a plurality of sets of pins and holes together, the motor can be prevented from rotating relative to the support member as viewed in the front-back direction while being attached to the support member. Thus, attachment of the motor to the support member is facilitated, compared to the case where the positioning mechanism includes only one pin and one hole.

Furthermore, in the present invention, preferably the positioning mechanism has at least three positioning portions.

In the case where the positioning mechanism has only two positioning portions, it is conceivable to dispose one positioning portion on each of the left and right of the axis of the output shaft of the motor, for example. In this case, if the axis of the output shaft is on a straight line connecting the two positioning portions and the respective positioning portions are equidistant from the axis of the output shaft as viewed in the front-back direction, it is perceived that a worker attaching the motor to the support member could accidentally attach the motor upside down.

Here, according to the above configuration of the present invention, by looking at the disposition of the pins and holes, a worker attaching the motor to the support member can more readily obtain an accurate grasp of the correspondence relation between the pins and holes, compared to the case where the positioning mechanism has only two positioning parts. Thus, a worker attaching the motor to the support member is unlikely to accidentally attach the motor upside down.

Furthermore, in the present invention, preferably the positioning mechanism has three positioning portions, and the three positioning portions are disposed in such a manner that a triangle whose vertices are respective positions of the three positioning portions is not an equilateral triangle, as viewed in the front-back direction.

In the case where the positioning mechanism has only three positioning portions, it is conceivable to dispose the positioning portions in such a manner that a triangle whose vertices are the respective positions of the positioning portions is an equilateral triangle, for example. In this configuration in which the positioning portions are equidistant from the axis of the output shaft as viewed in the front-back direction, it is perceived that a worker attaching the motor to the support member could attach the motor in such a manner as to be rotated 120 degrees to the left or right from the correct orientation.

Here, according to the above configuration of the present invention, the three positioning portions are disposed in such a manner that the triangle whose vertices are the respective positions of the three positioning portions is not an equilateral triangle. All of the pins can thereby be fitted into the holes only if the motor is correctly oriented as viewed in the front-back direction. Thus, a worker attaching the motor to the support member can be prevented from attaching the motor in such a manner as to be rotated 120 degrees to the left or right from the correct orientation as described above.

Furthermore, in the present invention, preferably the positioning portions are distributed upward and downward of an axis of the output shaft.

In the case where the positioning portions are concentrated upward or downward of the axis of the output shaft, the individual pins fitted into the corresponding holes tend to be subject to a comparatively large amount of stress from the motor, due to the weight of the motor and the like. Thus, to prevent the pins from being damaged by this stress, the pins would need to be formed from a material having a comparatively high strength. Manufacturing costs would thereby tend to increase.

Here, according to the above configuration of the present invention, the pins are unlikely to be subject to a comparatively large amount of stress from the motor, compared to the case where the positioning portions are concentrated upward or downward of the axis of the output shaft. Accordingly, it is possible to avoid incurring increased manufacturing costs in order to prevent the pins from being damaged.

Furthermore, in the present invention, preferably the positioning portions upward of the axis are greater in number than the positioning portions downward of the axis.

The individual pins fitted into the corresponding holes are subject to stress from the motor due to the weight of the motor and the like. Here, among the pins of the positioning mechanism, the total amount of stress applied by the motor to the pins disposed upward of the axis tends to be greater than that applied to the pins disposed downward of the axis. Thus, the case where the number of pins disposed upward of the axis is comparatively small, the individual pins disposed upward of the axis tend to be subject to a comparatively large amount of stress. Thus, to prevent the pins from being damaged by this stress, the pins would need to be formed from a material having a comparatively high strength. Manufacturing costs would thereby tend to increase.

Here, according to the above configuration of the present invention, a comparatively large number of pins are disposed upward of the axis. Thus, the individual pins disposed upward of the axis are unlikely to be subject to a comparatively large amount of stress. Accordingly, it is possible to avoid incurring increased manufacturing costs in order to prevent the pins from being damaged.

Furthermore, in the present invention, preferably the pin is attached to a pin attachment surface that is the support front surface or the contact surface, and protrudes forward or rearward from the pin attachment surface, and the pin is longer from the pin attachment surface to a protruding end thereof than a protruding length of the protrusion.

According to the above configuration, it is easy to reliably realize a configuration in which the pins are contactable with the holes while the protrusion is forward of the support front surface, at the time of attaching the motor to the support member. That is, according to the above configuration, it is easy to reliably realize an electric work vehicle in which the motor can be positioned, and scratching the surface of the motor is readily avoided, at the time of attaching the motor to the support member.

Furthermore, in the present invention, preferably the protruding end of the pin has a tapered portion, and the pin is longer from the pin attachment surface to a base end of the tapered portion than the protruding length of the protrusion.

According to the above configuration, the protruding ends of the pins are tapered, making it easy for a worker to insert the pins into the holes at the time of attaching the motor to the support member.

The positioning accuracy of the motor as viewed in the front-back direction increases as the tapered portion enters deeper into the hole, from when the distal end of the tapered portion begins to enter the hole until when the base end of the tapered portion enters the hole. Also, according to the above configuration, the entirety of the tapered portion from the distal end to the base end can be inserted into the hole while the protrusion is forward of the support front surface. The motor is thereby positioned with high accurately before the protrusion fits into the recess, at the time of attaching the motor to the support member.

Furthermore, in the present invention, preferably the pin is attached to the motor, and the hole is provided in the support member.

In the case where the pins are attached to the support member and the holes are provided in the motor, it is perceived that the periphery of the holes in the motor could be scratched, due to the pins coming in contact with the holes or the periphery thereof when the pins and the holes are fitted together.

Here, according to the above configuration of the present invention, the pins are attached to the motor, and the holes are provided in the support member. Thus, it is possible to avoid the motor being scratched in the manner described above.

Furthermore, in the present invention, preferably the motor is fastened to the support member by a fastener, and the positioning portions are inward of the fastener in a radial direction of the output shaft.

In the case where the positioning portions are outward of the fastener, the holes tend to be formed at positions close to the outer periphery of whichever of the motor and the support member the holes are provided in as viewed in the front-back direction. It is perceived that this could result in reduced strength around the holes. Thus, measures such as reinforcing the periphery of the holes would likely be needed. Manufacturing costs would thereby tend to increase.

Here, according to the above configuration of the present invention, the holes are formed inward of the fastener. Thus, reduced strength around the holes as described above is readily avoided. Accordingly, measures such as reinforcing the periphery of the holes are unlikely to be needed. An increase in manufacturing costs can thereby be readily avoided.

Furthermore, in the present invention, preferably the support member holds the motor in a cantilever manner.

According to the above configuration, the support structure of the motor tends to be simple, compared to the case where the motor is not held in a cantilever manner (e.g., is held on two sides). An increase in manufacturing costs is thereby readily suppressed.

### Brief Description of the Drawings

- FIG. 1: is a left-side view of a tractor.
- FIG. 2: is a partial cutaway plan view showing the configuration of a motor and the like.
- FIG. 3: is a front view showing the configuration of a support member and the like.
- FIG. 4: is a cross-sectional view showing the configuration of positioning portions and the like.
- FIG. 5: is a partial cutaway left-side view showing the configuration of the motor and the like.
- FIG. 6: is a partial cutaway left-side view showing the configuration of the motor and the like in another embodiment (10).

### Best Mode for Carrying out the Invention

Embodiments for implementing the present invention will be described based on the drawings. Note that, in the following description, unless stated otherwise, the directions of arrows F, B, L and R in the diagrams respectively indicate "forward", "back", "left", and "right". Also, the directions of arrows U and D respectively indicate "up" and "down".

### (Overall Configuration of Tractor)

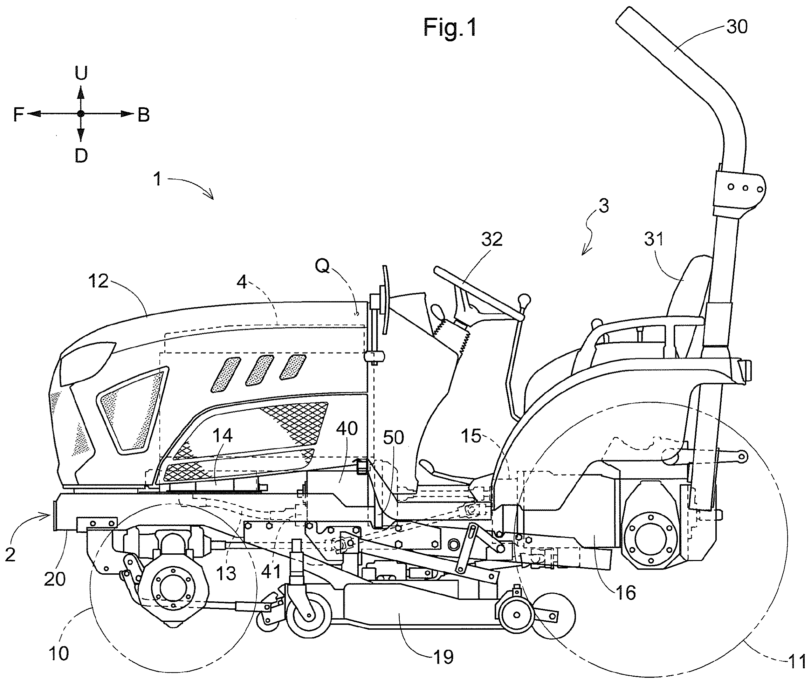

Hereinafter, the present embodiment describes a tractor 1 (corresponds to an "electric work vehicle" according to the present invention). As shown in FIG. 1, the tractor 1 includes left and right front wheels 10, left and right rear wheels 11, and a cover member 12.

The tractor 1 includes a body frame 2 and a driver section 3. The body frame 2 is supported by the left and right front wheels 10 and the left and right rear wheels 11.

The cover member 12 is at a front portion of the body. The driver section 3 is rearward of the cover member 12. In other words, the cover member 12 is forward of the driver section 3.

The driver section 3 has a protective frame 30, a driver's seat 31, and a steering wheel 32. An operator can sit in the driver's seat 31. The operator can thereby board the driver section 3. The left and right front wheels 10 are steered by the operation of the steering wheel 32. The operator is able to perform various operations in the driver section 3.

The tractor 1 includes a battery 4. Also, the cover member 12 is swingable about an opening/closing axis Q extending in a left-right direction of the body. The cover member 12 is thereby openable and closeable. When closed, the cover member 12 covers the battery 4.

The tractor 1 includes an inverter 14 and a motor 40. The motor 40 is downward of the battery 4. Also, the motor 40 is rearward of the inverter 14.

The battery 4 supplies power to the inverter 14. The inverter 14 converts direct-current electric power from the battery 4 into alternating-current electric power and supplies the alternating-current electric power to the motor 40. The motor 40 is then driven by the alternating-current electric power supplied from the inverter 14.

That is, the tractor 1 includes the inverter 14 that converts direct-current electric power from the battery 4 into alternating-current electric power and supplies the alternating-current electric power to the motor 40.

As shown in FIG. 1, the tractor 1 includes a harness 13. Also, the motor 40 has a connector 41. The connector 41 is in a front portion of the motor 40. The harness 13 connects the connector 41 to a front lower end portion of the inverter 14. That is, the tractor 1 includes the harness 13 connecting the front portion of the motor 40 to the inverter 14. The inverter 14 supplies power to the motor 40 through the harness 13.

The tractor 1 includes a hydrostatic continuously variable transmission 15 and a transmission 16. The motor 40 outputs driving force that is distributed to the hydrostatic continuously variable transmission 15 and work machinery 19. The driving force received from the motor 40 is adjusted for speed and torque by the hydrostatic continuously variable transmission 15 and transmitted to the transmission 16.

The hydrostatic continuously variable transmission 15 includes a hydraulic pump and a hydraulic motor, and is capable of changing the transmission ratio in a stepless manner. Since the hydrostatic continuously variable transmission 15 being provided with such a configuration is known, a detailed description relating the hydrostatic continuously variable transmission 15 will be omitted.

The driving force transmitted to the transmission 16 is adjusted for speed and torque by a geared transmission mechanism provided in the transmission 16 and distributed to the left and right front wheels 10 and the left and right rear wheels 11. The left and right front wheels 10 and the left and right rear wheels 11 are thereby driven.

The work machinery 19 is drivable by the driving force from the motor 40. In the present embodiment, the work machinery 19 is, specifically, a mower. The present invention is, however, not limited thereto, and the work machinery 19 may be machinery such as a tiller or a fertilizer applicator, for example.

As shown in FIG. 1, the body frame 2 includes left and right main frames 20 and a support member 50. The left and right main frames 20 extend in a front-back direction. The support member 50 is plate shaped. The support member 50 is oriented perpendicular to the front-back direction. The front surface of the support member 50 contacts the back end of the left and right main frames 20. The support member 50 is joined to the back end of the left and right main frames 20. The support member 50 may, for example, be joined to the back end of the left and right main frames 20 by welding, but is not particularly limited thereto.

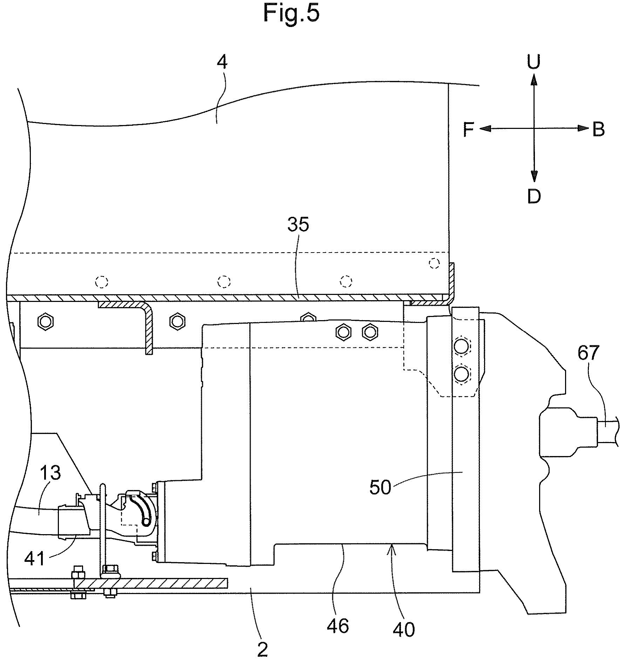

The motor 40 is held by the support member 50. That is, the tractor 1 includes the motor 40 held by the support member 50 and drivable by power supplied from the battery 4. Note that, as shown in FIG. 5, the battery 4 is supported by a support frame 35. The support frame 35 is supported by the body frame 2.

### (Oil Pump)

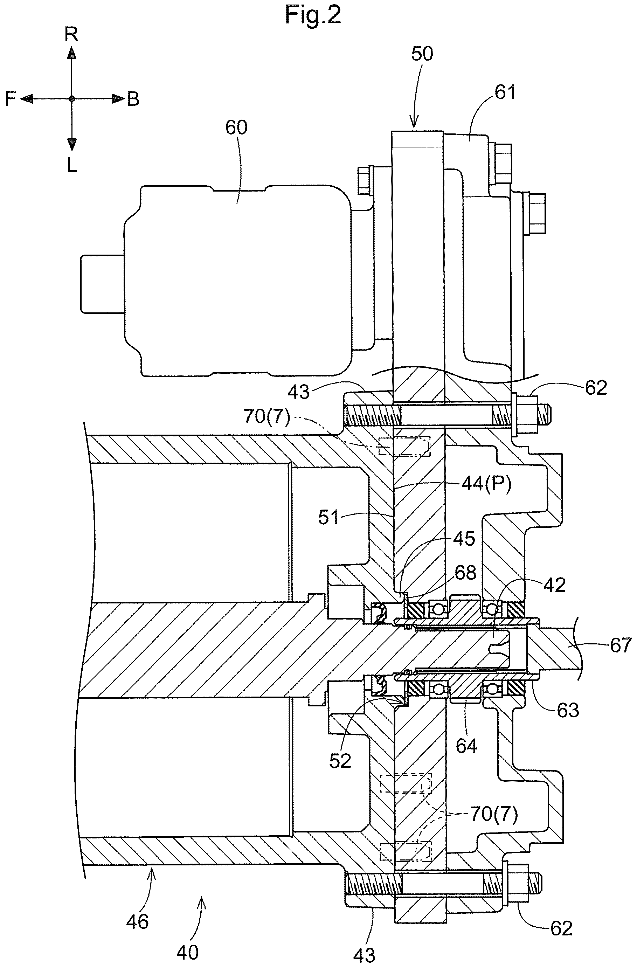

As shown in FIG. 2, the tractor 1 includes an oil pump 60. The oil pump 60 is provided on the right side of the body. The oil pump 60 is drivable by the driving force from the motor 40. The oil pump 60 then supplies hydraulic fluid to various parts of the body.

The structure for transmitting the driving force to the oil pump 60 will now be described in detail. As shown in FIGS. 2 and 5, the motor 40 is held in a cantilever manner by the support member 50, with the back end portion of the motor 40 held by the support member 50. The output shaft 42 of the motor 40 extends rearward through the support member 50. That is, the motor 40 is held in a cantilever manner by the support member 50, with the output shaft 42 of the motor 40 extending rearward through the support member 50.

Rearward of the support member 50 is a gear case 61, as shown in FIG. 2. Also, on a back end portion of the motor 40 is a flange 43 extending radially outward of the output shaft 42. The flange 43, the support member 50, and the gear case 61 are fastened together by a plurality of fasteners 62. That is, the motor 40 is fastened to the support member 50 by the fasteners 62.

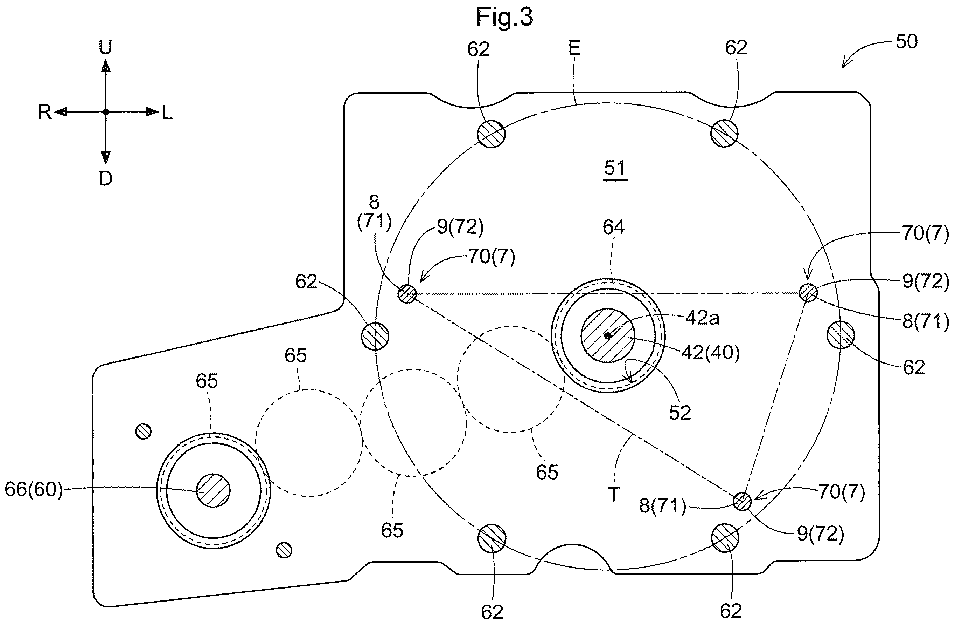

In the present embodiment, six fasteners 62 are provided, as shown in FIG. 3. The present invention is, however, not limited thereto, and five or fewer fasteners 62 or seven or more fasteners 62 may be provided.

The fasteners 62 in the present embodiment are, specifically, bolts. However, the present invention is not limited thereto. The fasteners 62 may, for example, be constituted by bolts and nuts, or by rivets or the like.

As shown in FIG. 2, the output shaft 42 has a tubular member 63 extending in the front-back direction attached thereto. The output shaft 42 is inserted into the tubular member 63. The tubular member 63 passes through the support member 50 and the gear case 61.

The tubular member 63 has an input gear 64 fixed thereto. Note that the input gear 64 may be integrated with the tubular member 63 or may be separated from the tubular member 63.

The tubular member 63 rotates integrally with the output shaft 42. The driving force from the output shaft 42 is thereby transmitted to the input gear 64 via the tubular member 63.

As shown in FIG. 3, the tractor 1 includes four transmission gears 65. The driving force that the output shaft 42 transmits to the input gear 64 is transmitted to an input shaft 66 of the oil pump 60, via the four transmission gears 65. In this configuration, the oil pump 60 is drivable by the driving force from the output shaft 42.

Note that the input gear 64 and the transmission gears 65 are housed in the space enclosed by the support member 50 and the gear case 61.

As shown in FIG. 2, the tubular member 63 has a transmission shaft 67 coupled to the back end portion thereof. The driving force that the tubular member 63 transmits to the transmission shaft 67 is distributed to the hydrostatic continuously variable transmission 15 (see FIG. 1) and the work machinery 19 (see FIG. 1).

### (Recess and Protrusion)

As shown in FIGS. 2 to 4, the support member 50 has a support front surface 51 in which a recess 52 is formed. The support front surface 51 is the front surface of the support member 50. The recess 52 is recessed rearward. That is, the recess 52 recessed rearward is formed in the support front surface 51 which is the front surface of the support member 50.

As shown in FIG. 3, the recess 52 is ring shaped around a hole (opening) in the support member 50. The output shaft 42 passes through the hole.

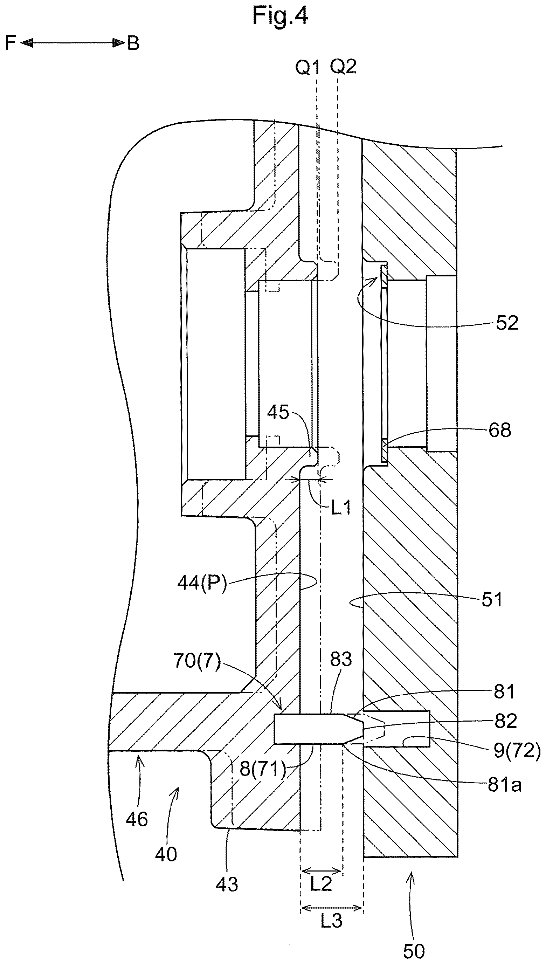

As shown in FIGS. 2 and 4, the motor 40 has a contact surface 44 and a protrusion 45. The contact surface 44 is a vertical surface on the back end portion of the motor 40. The contact surface 44 is a back surface of the motor 40. The contact surface 44 contacts the support front surface 51, with the motor 40 attached to the support member 50.

The protrusion 45 protrudes rearward from the contact surface 44. Also, the protrusion 45 is tubular (ring shaped) extending in the front-back direction. The output shaft 42 passes through the inside of the protrusion 45. The protrusion 45 has a shape that fits into the recess 52. That is, the motor 40 has the contact surface 44 that contacts the support front surface 51, and has the protrusion 45 that protrudes rearward from the contact surface 44 and that fits into the recess 52.

Note that, as shown in FIGS. 2 and 4, a ring-shaped collar 68 may be attached to the recess 52. With the motor 40 attached to the support member 50, the back end of the protrusion 45 may be in contact with the collar 68.

As shown in FIGS. 2 and 4, the motor 40 has a housing 46. The housing 46 is columnar (substantially columnar). The housing 46 includes the flange 43, the contact surface 44, and the protrusion 45.

The housing 46 is made of a predetermined first material. That is, the protrusion 45 is made of the first material. The first material may, for example, be an aluminum alloy or another metal, but is not particularly limited there.

The support member 50 is made of a predetermined second material. The second material has a higher hardness than the first material. That is, the support member 50 is made of the second material having a higher hardness than the first material. The second material may, for example, be iron or another metal, but is not particularly limited thereto.

### (Positioning Mechanism)

As shown in FIG. 2, the tractor 1 includes a positioning mechanism 7. The positioning mechanism 7 positions the motor 40 relative to the support member 50 as viewed in the front-back direction. Hereinafter, the positioning mechanism 7 will be described in detail.

As shown in FIG. 2, the positioning mechanism 7 includes a plurality of positioning portions 70. The positioning mechanism 7 preferably has three or more positioning portions 70, but is not particularly limited thereto. In the present embodiment, the positioning mechanism 7 has three positioning portions 70.

As shown in FIGS. 3 and 4, the positioning portions 70 each include a first guide portion 71 and a second guide portion 72 that correspond to each other. In the present embodiment, the first guide portion 71 is a pin 8 extending in the front-back direction. The second guide portion 72 is a hole 9 that fits together with the pin 8. Note that the positioning portions 70 all have the same structure. The positioning portion 70 shown in FIG. 4 is the leftmost positioning portion 70 of the three positioning portions 70 shown in FIGS. 2 and 3.

As shown in FIG. 4, the pins 8 are attached to the motor 40. The holes 9 are provided in the support member 50. That is, in the present embodiment, the motor 40 is provided with the first guide portions 71, and the support member 50 is provided with the second guide portions 72. However, the present invention is not limited thereto, and the support member 50 may be provided with the first guide portions 71 (pins 8), and the motor 40 may be provided with the second guide portions 72 (holes 9).

The positioning mechanism 7 positions the motor 40 relative to the support member 50 as viewed in the front-back direction, by the first guide portions 71 and the second guide portions 72 coming in contact with each other. More specifically, the positioning mechanism 7 positions the motor 40 relative to the support member 50 as viewed in the front-back direction, by the pins 8 and the corresponding holes 9 fitting together. Note that, in the present specification, "fitting" is a specific example of "contacting".

That is, the tractor 1 includes the positioning mechanism 7 that has the first guide portions 71 provided on one of the motor 40 and the support member 50, the second guide portions 72 provided on the other of the motor 40 and the support member 50, and that positions the motor 40 relative to the support member 50, by the first guide portions 71 and the second guide portions 72 coming in contact with each other.

As shown in FIG. 3, the output shaft 42 has an axis 42a that the positioning mechanism 7 positions in the center of the hole (opening) enclosed by the recess 52, as viewed in the front-back direction.

FIG. 3 shows a triangle T. The three vertices of the triangle T are the respective positions of the three positioning portions 70 as viewed in the front-back direction. In the present embodiment, the triangle T is not an equilateral triangle, as shown in FIG. 3. That is, the three positioning portions 70 are disposed in such a manner that the triangle T whose vertices are the respective positions of the three positioning portions 70 is not an equilateral triangle, as viewed in the front-back direction.

As shown in FIG. 3, two of the three positioning portions 70 are upward of the axis 42a. The remaining one of the three positioning portions 70 is downward of the axis 42a. That is, the positioning portions 70 are distributed upward and downward of the axis 42a of the output shaft 42. Also, the positioning portions 70 upward of the axis 42a are greater in number than the positioning portions 70 downward of the axis 42a.

FIG. 3 shows a disposition circle E. The disposition circle E is centered on the axis 42a as viewed in the front-back direction. The fasteners 62 is on the disposition circle E. The positioning portions 70 are all inward of the disposition circle E. That is, the positioning portions 70 are inward of the fasteners 62 in the radial direction of the output shaft 42.

As shown in FIG. 4, the pins 8 are attached to a pin attachment surface P, which is the support front surface 51 or the contact surface 44. In the present embodiment, the pin attachment surface P is the contact surface 44. That is, the pins 8 are attached to the contact surface 44. The pins 8 protrude rearward from the pin attachment surface P.

However, the present invention is not limited thereto, and the pin attachment surface P may be the support front surface 51. In this case, the pins 8 protrude forward from the pin attachment surface P. Also, in this case, the holes 9 may be provided in the motor 40.

That is, the pins 8 are attached to the pin attachment surface P, which is the support front surface 51 or the contact surface 44, and protrude forward or rearward from the pin attachment surface P.

As shown in FIG. 4, the pins 8 each have a tapered portion 81 and a body 83. The tapered portion 81 is formed on the protruding end of the pin 8. That is, on the protruding end of the pin 8 is formed the tapered portion 81. The tapered portion 81 decreases in diameter toward the distal end. The body 83 is columnar. The body 83 has the same diameter as a base end 81a of the tapered portion 81. Also, the body 83 has substantially the same diameter as the hole 9. The front end portion (root portion) of the body 83 is fixedly embedded in the motor 40. FIG. 4 shows a first length L1, a second length L2, and a third length L3.

The first length L1 is the protruding length of the protrusion 45. In other words, the first length L1 is the length of the protrusion 45 in the front-back direction from the contact surface 44 to the back end thereof.

The second length L2 is the length of the pin 8 in the front-back direction from the pin attachment surface P to the base end 81a of the tapered portion 81.

The third length L3 is the length of the pin 8 in the front-back direction from the pin attachment surface P to the protruding end 82 thereof.

As shown in FIG. 4, the second length L2 is longer than the first length L1. The third length L3 is longer than the second length L2. That is, the third length L3 is longer than the first length L1.

That is, the length of the pin 8 from the pin attachment surface P to the protruding end 82 thereof is longer than the protruding length of the protrusion 45. Also, the length of the pin 8 from the pin attachment surface P to the base end 81a of the tapered portion 81 is longer than the protruding length of the protrusion 45.

FIG. 4 shows the motor 40 attached to the support member 50. Note that the output shaft 42 is omitted in FIG. 4. Also, FIG. 4 shows a first position Q1 and a second position Q2. The first position Q1 and the second position Q2 are both forward of the support front surface 51. The first position Q1 is forward of the second position Q2.

At the time of attaching the motor 40 to the support member 50, the position of the protruding end 82 of the pin 8 in the front-back direction coincides with the position of the support front surface 51 in the front-back direction, in a case of the back end of the protrusion 45 being at the first position Q1. That is, when attaching the motor 40 to the support member 50, the pin 8 begins to enter the hole 9 at the point in time that the back end of the protrusion 45 reaches the first position Q1. At this point in time, the back end of the protrusion 45 is forward of the support front surface 51. That is, at this point in time, the protrusion 45 has not yet begun to fit into the recess 52.

Then, when the back end of the protrusion 45 moves to a position rearward of the first position Q1 and forward of the second position Q2 as a result of the motor 40 further approaching the support member 50, the pin 8 is contactable with the hole 9. For example, if the motor 40 deviates left or right from the appropriate position at this time, the pin 8 will come in contact with the hole 9. As a result, the motor 40 can be prevented from deviating further in the left-right direction.

At this time, the pin 8 is contactable with the hole 9 while the back end of the protrusion 45 is forward of the support front surface 51. That is, the positioning mechanism 7 is configured such that, when attaching the motor 40 to the support member 50, the first guide portion 71 is contactable with the second guide portion 72 while the protrusion 45 is forward of the support front surface 51.

Then, when the back end of the protrusion 45 reaches the second position Q2 as a result of the motor 40 further approaching the support member 50, the position of the base end 81a in the front-back direction coincides with the position of the support front surface 51 in the front-back direction, as shown by an imaginary line in FIG. 4. That is, when attaching the motor 40 to the support member 50, the body 83 begins to enter the hole 9, at the point in time that the back end of the protrusion 45 reaches the second position Q2. In other words, when attaching the motor 40 to the support member 50, the body 83 of the pin 8 begins to fit into the hole 9, at the point in time that the back end of the protrusion 45 reaches the second position Q2. At this point in time, the back end of the protrusion 45 is forward of the support front surface 51. That is, at this point in time, the protrusion 45 has not yet begun to fit into the recess 52.

Then, as a result of the motor 40 further approaching the support member 50, the protrusion 45 fits into the recess 52.

According to the configuration described above, at the time of attaching the motor 40 to the support member 50, the first guide portion 71 and the second guide portion 72 come in contact with each other before the protrusion 45 fits into the recess 52. The motor 40 can thereby be positioned. Furthermore, by moving the motor 40 rearward while keeping the first guide portion 71 and the second guide portion 72 in contact with each other, the protrusion 45 can be fitted into the recess 52, with the motor 40 positioned relative to the support member 50 as viewed in the front-back direction. The surface of the protrusion 45 is thereby unlikely to be scratched, compared to the case where the protrusion 45 is fitted into the recess 52 without positioning the motor 40 relative to the support member 50 as viewed in the front-back direction (with the motor 40 freely moveable relative to the support member 50 as viewed in the front-back direction).

Moreover, according to the configuration described above, the motor 40 is attached to the support member 50 from the front, and the harness 13 connecting the motor 40 to the inverter 14 is connected to a front portion of the motor 40. Thus, neither the connector 41 of the motor 40 to the harness 13 nor the harness 13 itself is likely to interfere with attaching the motor 40 to the support member 50, compared to the case where the harness 13 is connected to a back portion of the motor 40.

That is, according to the configuration described above, a tractor 1 can be realized in which, at the time of attaching the motor 40 to the support member 50, the motor 40 can be positioned and smoothly attached, and scratching of the surface of the motor 40 is readily avoided.

### Other Embodiments

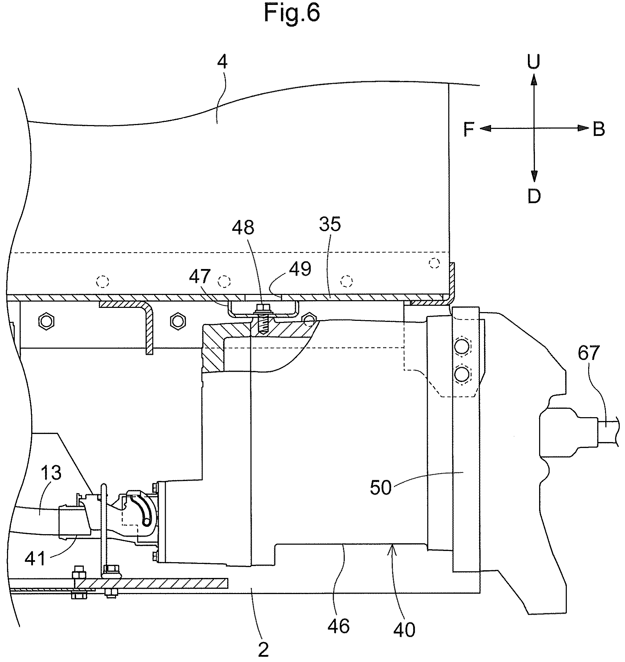

(1) As long as the motor 40 can be positioned relative to the support member 50 as viewed in the front-back direction, the first guide portion 71 need not be the pin 8, and the second guide portion 72 need not be the hole 9. For example, the first guide portion 71 and the second guide portion 72 may be constituted by a rail and a roller that is guided by the rail.
(2) The positioning mechanism 7 may include only one positioning portion 70.
(3) The triangle T may be an equilateral triangle.
(4) All of the positioning portions 70 may be disposed upward of the axis 42a or may be disposed downward of the axis 42a.
(5) The positioning portions 70 upward of the axis 42a may be fewer in number than the positioning portions 70 downward of the axis 42a, or may be equal in number thereto.
(6) The pin 8 need not be provided with the tapered portion 81.
(7) The positioning portions 70 may be located outward of the fasteners 62 in the radial direction of the output shaft 42.
(8) The positioning portions 70 may be disposed on the disposition circle E.
(9) The position and shape of the protrusion 45 and the recess 52 can be changed as appropriate.
(10) As shown in FIG. 6, the motor 40 may be held other than in a cantilever manner. In the example shown in FIG. 6, a coupling portion 47 and a coupling bolt 48 are provided. The coupling portion 47 is constituted by bending a plate material bent into a channel shape. The coupling portion 47 is coupled to a lower surface of the support frame 35, while protruding downward from the lower surface of the support frame 35. The lower surface of the coupling portion 47 contacts an upper end portion of the housing 46.

The coupling portion 47 is coupled to the upper end portion of the housing 46 by the coupling bolt 48 which extends in the up-down direction. With this structure, the coupling portion 47 and the support member 50 hold the motor 40.

The support frame 35 has an opening 49 formed therein at a position upward of the coupling bolt 48. A worker is able to insert a tool such as a wrench into the opening 49 and tighten or remove the coupling bolt 48 with the tool.

Note that the configurations disclosed in the above-described embodiments (including the other embodiments; this similarly applies below) can be applied in combination with configurations disclosed in other embodiments as long as no inconsistencies arise. Also, the embodiments disclosed herein are illustrative, and the embodiments of the present invention are not limited thereto and can be modified as appropriate within a range that does not depart from the object of the invention.

### Industrial Applicability

The present invention can be utilized not only in tractors but also in various electric work vehicles such as combine harvesters, rice transplanters, and construction machineries.

### Description of Reference Signs

- 1: Tractor (electric work vehicle)
- 4: Battery
- 7: Positioning mechanism
- 8: Pin
- 9: Hole
- 13: Harness
- 14: Inverter
- 40: Motor
- 42: Output shaft
- 42a: Axis
- 44: Contact surface
- 45: Protrusion
- 50: Support member
- 51: Support front surface
- 52: Recess
- 62: Fastener
- 70: Positioning portion
- 71: First guide portion
- 72: Second guide portion
- 81: Tapered portion
- 81a: Base end
- 82: Protruding end
- P: Pin attachment surface
- T: Triangle

## Claims

1. An electric work vehicle comprising:
- a battery;
- a motor held by a support member and drivable by power supplied from the battery;
- an inverter configured to convert direct-current electric power from the battery into alternating-current electric power and supply the alternating-current electric power to the motor; and
- a harness connecting a front portion of the motor to the inverter,
- the inverter supplying power to the motor through the harness,
- the motor being held by the support member, with an output shaft of the motor extending rearward through the support member,
- the support member having a support front surface that is a front surface of the support member in which a recess recessed rearward is formed,
- the motor having a contact surface contacting the support front surface and a protrusion protruding rearward from the contact surface and fitting into the recess,
- the protrusion being made of a first material,
- the support member being made of a second material having a higher hardness than the first material,
- comprising a positioning mechanism having a first guide portion provided on one of the motor and the support member and a second guide portion provided on the other of the motor and the support member, and configured to position the motor relative to the support member as viewed in a front-back direction, by the first guide portion and the second guide portion coming in contact with each other, and
- at a time of attaching the motor to the support member, the first guide portion and the second guide portion of the positioning mechanism are contactable with each other while the protrusion is forward of the support front surface.

2. The electric work vehicle according to claim 1, wherein
- the first guide portion is a pin extending in the front-back direction,
- the second guide portion is a hole that fits together with the pin,
- the positioning mechanism has a plurality of positioning portions, and
- the positioning portions each include one first guide portion and one second guide portion that correspond to each other.

3. The electric work vehicle according to claim 2, wherein the positioning mechanism has at least three positioning portions.

4. The electric work vehicle according to claim 2 or 3, wherein
- the positioning mechanism has three positioning portions, and
- the three positioning portions are disposed in such a manner that a triangle whose vertices are respective positions of the three positioning portions is not an equilateral triangle, as viewed in the front-back direction.

5. The electric work vehicle according to any one of claims 2 to 4, wherein the positioning portions are distributed upward and downward of an axis of the output shaft.

6. The electric work vehicle according to claim 5, wherein the positioning portions upward of the axis are greater in number than the positioning portions downward of the axis.

7. The electric work vehicle according to any one of claims 2 to 6, wherein
- the pin is attached to a pin attachment surface that is the support front surface or the contact surface, and protrudes forward or rearward from the pin attachment surface, and
- the pin is longer from the pin attachment surface to a protruding end thereof than a protruding length of the protrusion.

8. The electric work vehicle according to claim 7, wherein
- the protruding end of the pin has a tapered portion, and
- the pin is longer from the pin attachment surface to a base end of the tapered portion than the protruding length of the protrusion.

9. The electric work vehicle according to any one of claims 2 to 8, wherein
- the pin is attached to the motor, and
- the hole is provided in the support member.

10. The electric work vehicle according to any one of claims 2 to 9, wherein
- the motor is fastened to the support member by a fastener, and
- the positioning portions are inward of the fastener in a radial direction of the output shaft.

11. The electric work vehicle according to any one of claims 1 to 10, wherein the support member holds the motor in a cantilever manner.
